# EUROPEAN PATENT APPLICATION

(11) **EP 1 555 458 A2**
(43) Date of publication of application: **20.07.2005**
(21) Application number: 05100172.5
(22) Date of filing: 13.01.2005
(51) Int. Cl.: F16H 37/00

(54) **CVT transmission for motor vehicles, in particular for farm tractors.**

(30) Priority: 16.01.2004 IT BO20040017
(71) Applicant: CNH Italia S.p.A., 41100 Modena (IT)
(72) Inventor: Benassi, Giancarlo, 41100, Modena (IT)
(74) Representative: CNH IP Department

(57) **Abstract**

A CVT transmission (100) for motor vehicles, in particular for farm tractors. The CVT transmission (100) comprises a first transmission system with fixed transmission ratio and a second transmission system with variable transmission system, an epicyclic rotary mechanism (24) also being provided for the combination of the two transmission systems. The CVT transmission (100) comprises a pair of pulleys (18, 20) with axes ((b), (c)), able to transmit motion between them by means of a belt (or of a chain) (19), whilst the epicyclic rotary mechanism (24) comprises a central shaft (25) with axis (d). The axes ((d), (b), (c)) are positioned according to vertices (DBC) of a triangle (TR).

## Description

The present invention relates to a CVT transmission for motor vehicles, in particular for farm tractors.

In the field of tractors, transmissions in which a continuous control of speed is effected, called CVT transmissions, are known. In other words, in these transmissions, one is able continuously to regulate the speed of the motor vehicle, throughout the range between the maximum forward speed and the maximum reverse speed.

In particular, in known solutions, the CVT transmission comprises an apparatus for the continuous variation of the motion in terms of delivered torque and speed. Continuous variation is obtained between two shafts and a differential gear by means of a first mechanical device with fixed transmission ratio, and a second mechanical device with variable transmission ratio; between the first and the second device is interposed an epicyclic rotary mechanism. In these applications, as a second mechanical device with variable transmission ratio, a device comprising two expandable pulleys (with variable diameters) is advantageously used, which device is amply used and therefore will not be described in detail hereafter.

Such a transmission is known, for example, from the patent EP-B1-0 889 260.

However, whilst it does assure a reliable continuous speed variation, the transmission described in the aforesaid document has the disadvantage of not being compact and therefore it is not suitable for use in low-power tractors in which the volume of the components constitutes a determining factor.

For example, in the transmission described in EP-B1-0 889 260 the epicyclic rotary mechanism is positioned at the central axis of one of the two expandable pulley. This clearly entails transverse dimensions which are penalising in the field of low-power tractors.

The object of the present invention, therefore, is to provide a CVT transmission for motor vehicles, in particular for low-power farm tractors, which is free of the aforesaid drawback.

Therefore according to the present invention a CVT transmission for motor vehicles is provided, in particular for farm tractors as claimed by the characteristics set out in claim 1.

The present invention will now be described further, with reference to the accompanying drawings, which show a non limiting embodiment example, in which:
Figure 1 schematically shows a plan view of a CVT transmission for motor vehicles, in particular for farm tractors, according to the present invention; and
Figure 2 shows a front view of the transmission of Figure 1 (in 2:1 scale relative to the drawing of Figure 1); the outer profile of the motor vehicle being shown in dashed lines.

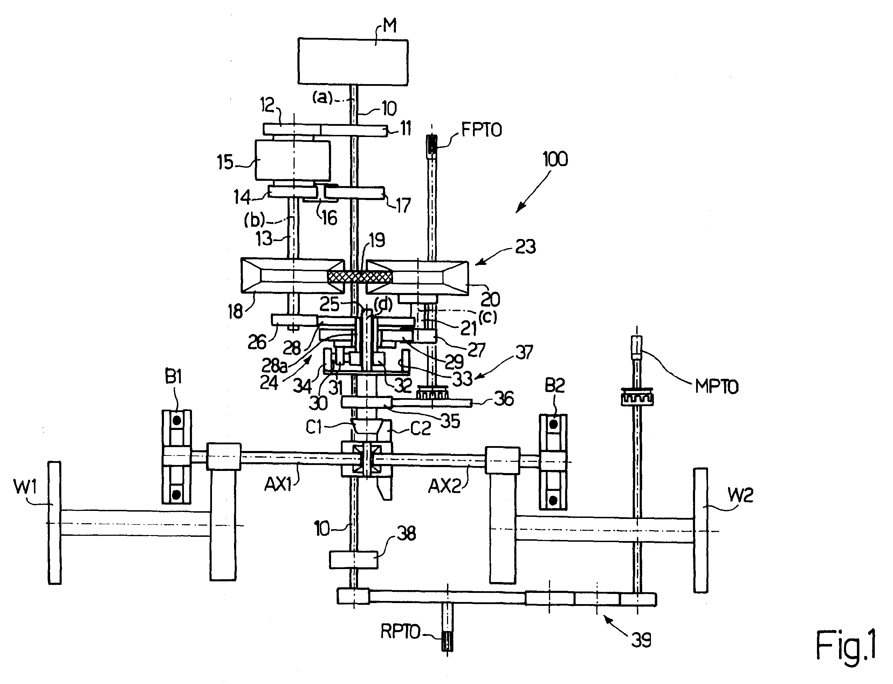

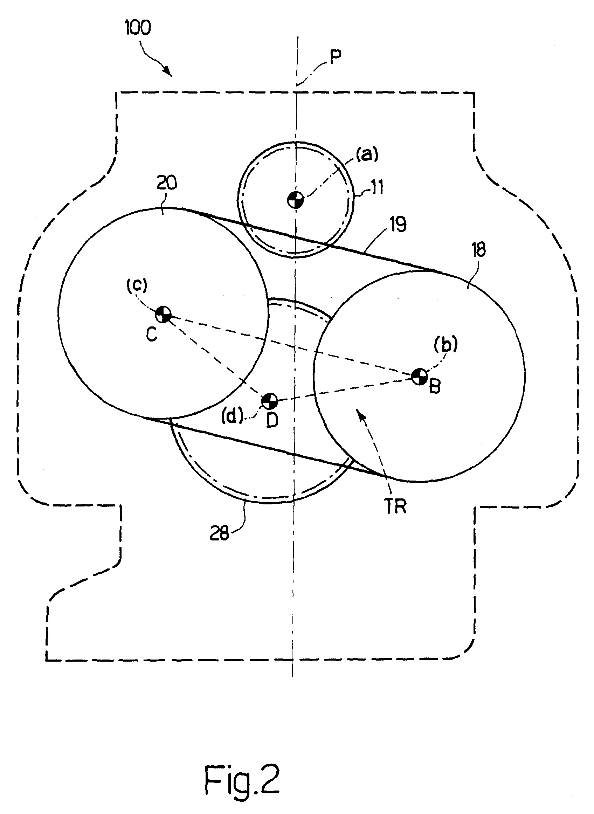

In a transmission 100 shown in Figures 1 and 2, the mechanical power produced by an engine M of a tractor (not shown in its entirety) is transmitted to a first shaft 10, which represents the drive shaft which, as shall be seen, not only sets in rotation the wheels W1 and W2 (Figure 1), but is also able directly to actuate a rear PTO, RPTO (see below).

As shown in Figure 2, the axis (a) of the drive shaft 10 lies on a plane of substantial longitudinal symmetry of the tractor. The trace of said plane on the sheet is designated with the letter P (Figure 2).

On the drive shaft 10 is keyed a gear wheel 11 meshed with another idle gear wheel 11 on a shaft 13 (having an axis (b)) parallel to the drive shaft 10 itself (with axis (a)).

Moreover, on the shaft 13 is idle another gear wheel 14. The shaft 13 also bears a clutch 15 which, for purpose that will become more readily apparent below, is able to make integral with the shaft 13 either the gear wheel 12 or the gear wheel 14.

The gear wheel 14, in turn, through an idle gear wheel 16 meshes with a gear wheel 17, also keyed on the aforementioned drive shaft 10.

If the gear wheel 12 is made integral with the shaft 13 by the clutch 15 (and, consequently, the gear wheel 14 on the shaft 13 is made idle), motion is transmitted by the drive shaft 10 to the shaft 13 in "direct" fashion, i.e. in other words the motor vehicle will travel ''in forward running mode", whilst if the gear wheel 14 is keyed on the shaft 13 (and consequently, the gear wheel 12 on the shaft 13 is made idle) then motion is transmitted by the drive shaft 10 to the shaft 13 in "reverse" fashion, i.e. in other words the tractor will travel "in reverse running mode", thanks to the presence of the idle gear wheel 16.

On the shaft 13 is also keyed an expandable pulley 18, coupled by means of belt (or chain) 19 to a second pulley 20, also expandable, keyed onto a shaft 21 (having an axis (c)).

The set of pulleys 18, 20, with the respective shafts 13, 21, and of the belt (or chain) 19 constitutes a device 23 for the continuous variation of motion.

As shall be seen, both shafts 13 and 21 are kinematically united to an epicyclic rotary mechanism 24 having a central shaft 25, whose axis (d) is parallel to the aforesaid axes (a), (b), and (c)).

For this purpose, on the shaft 13 is keyed a gear wheel 26, whilst a gear wheel 27 is integral with the shaft 21.

Respectively, the gear wheel 26 meshes with the sun gear 28 of the epicyclic rotary mechanism 24, idle on the central shaft 25, whilst the wheel 27 transmits motion to a spider 29 mounted idle on a coupling box 28a of the aforesaid sun gear 28.

In a manner known in itself, to the spider 29 is associated a plurality of satellites 30 (only one is shown in Figure 1), each of which is pivotally engaged to a respective pivot pin 31 in a single piece with the spider 29.

As shown in Figure 1, each planet gear 30 meshes at one side with a gear wheel 32 obtained in a single piece with the sun gear 28, and on the other with an inner toothing 33 of the crown 34 integral with the central shaft 25.

In known fashion, at the epicyclic rotary mechanism 24 the algebraic sum occurs of the motions coming, respectively, from the coupling of the gear wheel 26 with the sun gear 28 (with constant transmission ratio), and from the coupling of the gear wheel 27 with the spider 29 (variable transmission ratio achieved by means of the continuous motion variation device 23).

Exploiting the combinatory effects of the two motions which occur at the epicyclic rotary mechanism 24 it is possible to obtain the desired continuous speed variation to change in the desired fashion the rotation speed of a bevel pinion C1 meshed with a ring bevel gear C2 belonging to a differential gear DIF.

As is well known, by changing the angular speed of the ring bevel gear C2 over time it is possible to change over time also the speed of the differential gear DIF and hence of the pair of rear wheels W1, W2 joined thereto by means of two axles AX1, respectively AX2 supported, respectively, by a bearing B1 and by a bearing B2.

Observing Figures 1 and 2 together, it is readily apparent that the axis (d) of the central shaft 25 of the epicyclic rotary mechanism 24 and the axes (b) and (c) of the pulley 18 and, respectively, of the pulley (20) are positioned according to vertices DBC of a triangle TR.

This physical characteristic translates into a considerable improvement in terms of the compactness of the transmission 100 and in a remarkable limitation of its transverse dimensions with respect to the plane of symmetry of trace P (Figure 2).

Moreover, the central placement both of the drive shaft 10 and of the triangle TR has the additional advantage that the disposition of the different PTOs (Power take offs) of the tractor is particularly convenient.

It should also be noted that the triangle TR is positioned in substantially balanced fashion relative to the trace P of the longitudinal plane of symmetry of the tractor (Figure 2) and that the trace P, in addition to passing through the axis (a) of the drive shaft 10, passes at a very small distance from the axis (d) of the central shaft 25 of the epicyclic rotary mechanism 24.

All this has the consequence of an extreme equilibrium between the transmission members, and an optimal disposition of the parts, to reduce, as much as possible, the transverse dimensions (for example relative to the axis (a) of the transmission shaft 10).

Moreover, if the central shaft 25 comprises an additional gear wheel 35 downstream of the epicyclic rotary mechanism 24, said gear wheel can be made to mesh with a gear wheel 36 associated with a motion transmission device 37 and a front PTO, FPTO for actuating a pair of front wheels (not shown), device that will be inserted (with known means) if the tractor is to travel using all four drive wheels.

Advantageously, the transmission system 100 of the present invention, in addition to the aforesaid front PTO, FTPO, and rear PTO, RPTO (which may be connectable/detachable to/from the shaft 10 by means of a clutch 38), can provide for the use of an additional PTO located in intermediate position relative to the first two and designated herein as MPTO.

The MPTO takes motion from the RPTO by means of a gear train 39 and it serves the purpose of actuating, at the operator's choice, a series of tools (not shown herein) which are positioned in the lower part of the tractor.

## Claims

1. A CVT transmission (100) for motor vehicles, in particular for farm tractors, comprising a first transmission system by means of first mechanical means (26, 28) with fixed transmission ratio, and a second transmission system through second mechanical means (23, 27, 29) with variable transmission ratio, between said first mechanical means (16, 28) and said second mechanical means (23, 27, 29) being interposed an epicyclic rotary mechanism (24) for the combination of the two transmission systems; and
**characterized in that** :
- said second mechanical means (23, 27, 29) comprises a pair of pulleys (18, 20), with axes ((b), (c)), able to transmit motion between them by means of a member (19);
- said epicyclic rotary mechanism (24) comprises a central shaft (25) with axis (d); and
- said axes ((d), (b), (c)) are positioned according to vertices (DBC) of a triangle (TR).

2. A CVT transmission (100) as claimed in claim 1, wherein said triangle (TR) is arranged in substantially balanced fashion relative to a trace (P) of a longitudinal plane of symmetry of said motor vehicle.

3. A CVT transmission (100) as claimed in claim 2, wherein said trace (P) passes through an axis (a) of a drive shaft (10) and it also passes at a small distance from said axis (d) of said central shaft of symmetry (25) of said epicyclic rotary mechanism (24).

4. A CVT transmission (100) as claimed in any of the previous claims, wherein on said central shaft (25) is keyed a gear wheel (35) whereby motion is sent to a forward PTO (FPTO) able to set in motion two front wheels of said motor vehicle to achieve a traction with four driving wheels.

5. A CVT transmission (100) as claimed in any of the previous claims, wherein the drive shaft (10) directly actuates a rear PTO (RPTO), which, in turn, actuates an intermediate PTO (MPTO) able to set in motion a plurality of tools positioned underneath the motor vehicle.
